# FASCICULE DE BREVET EUROPEEN

(11) **EP 3 008 704 B1**
(45) Date de publication et mention de la délivrance du brevet: **20.11.2019**
(21) Numéro de dépôt: 14734414.7
(22) Date de dépôt: 12.06.2014
(51) Int. Cl.: G07C 9/00

(54) **PROCEDE DE CONTROLE DE PERSONNES ET APPLICATION A L'INSPECTION DES PERSONNES**
VERFAHREN ZUR STEUERUNG VON PERSONEN UND ANWENDUNG ZUR PERSONENKONTROLLE
METHOD OF CONTROL OF PERSONS AND APPLICATION TO THE INSPECTION OF PERSONS

(30) Priorité: 14.06.2013 FR 1355607
(43) Date de publication de la demande: 20.04.2016
(73) Titulaire: Idemia Identity & Security France, 92400 Courbevoie (FR)
(72) Inventeur: ARPIN, Didier, décédé (FR); RIVEAU, Christine, F-92130 Issy les Moulineaux (FR); CLOUET, Antoine, F-92130 Issy les Moulineaux (FR)
(74) Mandataire: Regimbeau
(86) Numéro de dépôt international: PCT/EP2014/062197
(87) Numéro de publication internationale: WO 2014/198812

(56) Documents cités:
- WO-A2-2004/006076
- WO-A2-2005/054981
- US-A1- 2003 058 084
- US-A1- 2006 126 906
- US-A1- 2006 197 836
- US-A1- 2008 302 870

## Description

### DOMAINE DE L'INVENTION

La présente invention concerne le domaine des procédés de contrôle de personnes, ainsi que des systèmes de contrôle et d'inspection de personnes dans des zones d'inspection.

L'invention s'applique notamment à des systèmes installés dans des lieux sensibles accueillant du public, et dans lesquels il est nécessaire de réaliser un contrôle et un suivi des individus. L'invention s'applique par exemple aux lieux tels que des aéroports, comprenant des systèmes de contrôle permettant d'inspecter et de filtrer des personnes s'apprêtant à embarquer dans un avion (ou un navire, etc.).

### ETAT DE LA TECHNIQUE

Des infrastructures de contrôle et d'inspection de personnes sont généralement installées dans des lieux dits sensibles, et en particulier aux infrastructures d'importance vitale au sens de la directive EU COM(2006) 766 et/ou au sens de l'American Presidential directive PDD-63 de Mai 1998 (« Critical Infrastructure Protection ») dès lors que celles-ci accueillent du public.

Des lieux sensibles sont par exemple des bâtiments de haute sécurité (bâtiments d'Etats ou Publics tels qu'ambassades, départements de défense, agences de renseignements, hôpitaux,..), des bâtiments industriels ou commerciaux de type banques ou centrales nucléaires, des infrastructures de transport (ports, aéroports, gares,...) ou encore des infrastructures publiques accueillant ponctuellement un grand nombre de personnes (ex : stades, salles de concert...).

Dans de tels lieux, les techniques d'inspection et de filtrage actuellement installés sont des processus séquentiels qui comportent un certain nombre d'étape de contrôle.

Par exemple, dans le cas des aéroports, l'inspection de personnes avant leur embarquement peut comprendre les étapes suivantes :
- Enregistrement d'un individu, au cours duquel on peut contrôler son identité et on vérifie son droit d'embarquer grâce à un document d'identité, et on lui remet une carte d'embarquement symbolisant ce droit d'embarquer.
- Contrôle de sécurité, au cours duquel on contrôle la carte d'embarquement et on fait franchir à l'individu et le cas échéant à son bagage différents systèmes d'inspection afin de déceler d'éventuelles menaces ou, dans certains cas, des objets interdits. Des variations dans le protocole d'inspection mis en oeuvre sur l'individu et son bagage peuvent éventuellement être mises en oeuvre si l'individu représente un risque particulier, ou si les résultats d'une première inspection indiquent l'existence probable d'une menace ou d'un objet interdit. C'est le cas par exemple quand du métal a été détecté sur individu par un portique et que l'individu doit ensuite subir une fouille de vérification.
- Contrôle d'embarquement, où l'on vérifie une nouvelle fois le droit à embarquer de l'individu en contrôlant la carte d'embarquement, et le cas échéant son identité.

Ce processus est particulièrement long et contraignant pour les passagers, qui doivent à chaque étape produire leur document d'identité et/ou leur carte d'embarquement.

Le caractère séquentiel, qui est nécessaire puisqu'il permet d'informer de manière implicite un poste de contrôle que les postes précédents ont été franchis avec succès, génère des durées d'attentes longues, inconfortables, qui rendent ce mode de déplacement peu pratique, et ne permettent pas à des personnes présentant un niveau de risque faible de franchir les contrôles rapidement.

Le fait d'appliquer le même niveau de sécurité à toutes les personnes franchissant les contrôles peut également impliquer de diminuer ce niveau de sécurité pour éviter les files d'attente trop longues, au risque de ne pas intercepter un individu suspect.

En outre, les différentes étapes de contrôle sont réalisées de façon disjointes par des opérateurs différents, ce qui ne permet pas de rassembler des informations de sécurité sur les personnes, comprenant par exemple un risque associé à une personne, ou récapitulant les différentes étapes d'inspection mises en oeuvre sur cette personne et les résultats desdites inspections. Ceci réduit donc la sécurité du système.

La vérification manuelle de documents d'identité ou de cartes d'accès apporte en outre une sécurité limitée car il est parfois difficile pour un opérateur de distinguer un faux document.

Enfin, les systèmes actuels rendent impossible la localisation de l'individu entre deux étapes de contrôle.

Les mêmes problématiques se posent de manière générale dans d'autres lieux sécurisés, dans lesquels les procédés d'inspection et de contrôle comprennent classiquement plusieurs étapes séquentielles de vérification d'identité et/ou de droits d'accès, d'inspections de sécurité, etc., entrainant des files d'attentes importantes pour différentes étapes d'inspection qui ne sont aucunement liées entre elles.

Il existe donc un besoin pour proposer un système permettant le contrôle intégré et automatisé d'individus qui soit plus efficace que les systèmes actuels, qui réduise les temps d'attente pour le franchissement de l'ensemble des étapes de contrôle tout en permettant un contrôle plus sécurisé d'individus présentant un risque particulier.

Il existe également un besoin pour un système qui permette de déterminer la position des individus contrôlés.

Certains systèmes ont été proposés qui résolvent partiellement cette problématique. Ainsi par exemple, il a été proposé de délivrer à un individu une puce contenant des informations d'identité liées à cet individu, et d'utiliser cette puce pour réaliser le contrôle de l'individu à des étapes ultérieures, et pour le localiser dans la zone dans laquelle l'individu évolue.

Les documents US2003/058084 et US2006/126906 décrivent des systèmes de contrôle dans lesquels, à un premier point de contrôle d'une personne, une première donnée biométrique est acquise sur la personne, et, à un second point de contrôle, une deuxième donnée biométrique est acquise sur la personne et comparée à la première pour vérifier que la personne franchissant le deuxième point de contrôle est la même que celle ayant franchi le premier point de contrôle.

On connait par exemple le document US 2008/302870 qui propose de délivrer à une personne une carte d'embarquement comprenant une donnée biométrique de la personne, pour authentifier ensuite la personne par une authentification entre la donnée de sa carte d'embarquement et une donnée fraichement acquise sur la personne.

On connait également le document US 2010/0289614, qui propose d'anticiper l'enregistrement de certaines informations pour accélérer le contrôle une fois dans la zone d'inspection à franchir avant d'accélérer à la zone à accès sécurisé.

Cependant ce type de proposition ne supprime pas le caractère séquentiel des contrôles, et contraint toujours l'individu à présenter un document (en l'espèce la puce), à chaque contrôle. De plus l'échange du document est possible entre deux individus, créant le risque de laisser passer une menace.

### PRESENTATION DE L'INVENTION

L'invention a pour but de pallier la problématique mentionnée ci-avant, en proposant un procédé de contrôle d'une personne qui permet de s'affranchir de la fourniture de documents à la personne pour le franchissement des contrôles.

L'invention a également pour but de proposer un procédé de contrôle d'une personne permettant de connaître les étapes de contrôle qu'elle a franchies et de la localiser, tout en préservant son anonymat, le procédé suivant ainsi les principes préconisé par le concept de « Privacy by Design ».

L'invention a enfin pour but de proposer un procédé comprenant des étapes d'inspection d'une personne qui soient non séquentielles et permettent ainsi de supprimer des files d'attentes intempestives.

A cet égard, l'invention a pour objet un procédé de contrôle de personnes, selon la revendication 1.

L'invention propose encore un système de contrôle et d'inspection de personnes dans une zone d'inspection, selon la revendication 14.

Le procédé de contrôle selon l'invention permet de suivre la progression d'une personne dans une zone à partir de ses traits biométriques, sans pour autant l'identifier formellement ; en effet, grâce à la signature biométrique chiffrée et à l'identifiant public associé, il suffit d'associer à la personne cet identifiant pour assurer son suivi, sans besoin de connaître sa véritable identité.

Des informations diverses peuvent être associées à cet identifiant pour former un profil, permettant le cas échéant d'adapter le niveau de contrôle réalisé sur la personne.

En outre, la possibilité de supprimer de la base de données les signatures biométriques chiffrées des personnes ayant franchi les contrôles permet de limiter la quantité de signatures stockées dans cette base et donc de limiter les « faux positifs », c'est-à-dire des identifications erronées de personnes.

Enfin, l'agrégation des informations de sécurité relatives à la personne et aux étapes de contrôles et d'inspection dans une base de données centralisée permet d'installer des postes d'inspection associés aux modules de suivi en réseau sans caractère séquentiel, ce qui réduit voire supprime les files d'attentes aux postes d'inspection.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :
- Les figures 1a et 1b représentent schématiquement un système de contrôle et d'inspection d'une personne selon deux modes de réalisation distincts,
- La figure 2a représente un système de contrôle d'inspection d'une personne selon un mode de réalisation particulier,
- La figure 2b représente schématiquement une partie d'un système d'inspection comprenant un module de suivi associé à une unité d'inspection.
- La figure 2c représente une variante d'unité d'inspection.
- La figure 3 représente les principales étapes d'un procédé de contrôle d'une personne,
- La figure 4 représente un exemple de vérification du franchissement par une personne des points de contrôle.

### DESCRIPTION DETAILLEE D'AU MOINS UN MODE DE REALISATION DE L'INVENTION

### Système de contrôle et d'inspection de personnes

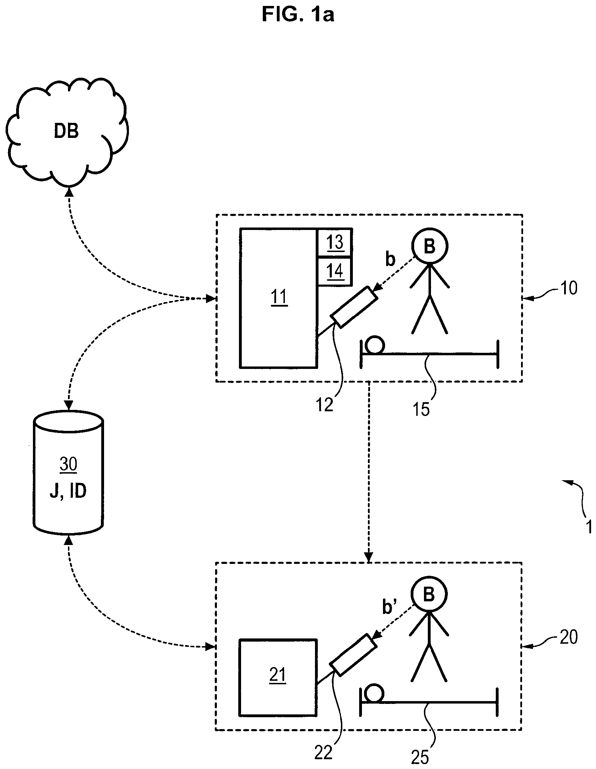

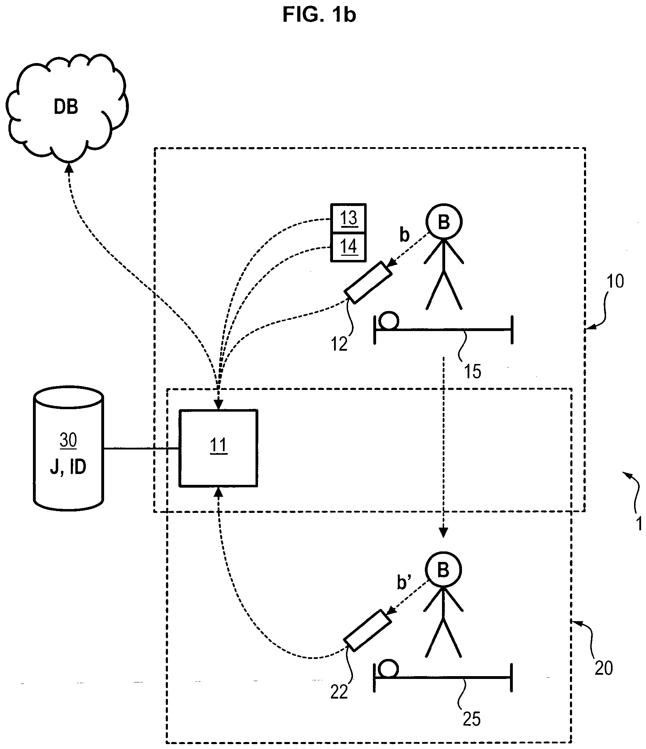

En référence aux figures 1a et 1b, on a représenté schématiquement un système 1 de contrôle et de suivi d'une personne.

Ce système 1 est avantageusement disposé en entrée d'une zone d'accès sécurisé d'un lieu sensible accueillant des personnes, comme par exemple la zone d'embarquement dans un aéroport, une ambassade, un musée, etc.

On prendra pour illustrer la suite l'exemple d'une zone d'accès à une salle d'embarquement d'un aéroport, dans laquelle seules les personnes enregistrées pour un vol, ainsi que certains membres du personnel, sont autorisés à pénétrer, bien que cet exemple soit nullement limitatif et que le système de suivi et de contrôle soit applicable à n'importe quel lieu sensible.

Le système 1 délimite avantageusement une zone d'inspection qu'une personne doit franchir avant d'être autorisée à pénétrer dans la zone à accès sécurisé. Dans la zone d'inspection se trouvent une pluralité de points de contrôle et/ou d'inspection de personnes.

Chaque point de contrôle et/ou d'inspection est matérialisé par un module de contrôle et/ou d'inspection d'une personne. Un tel module comprend avantageusement un capteur de données biométriques, adaptées pour acquérir une donnée biométrique sur un trait biométrique d'une personne, et une unité de traitement adaptée pour communiquer avec ledit capteur pour recevoir la donnée biométrique et la traiter. Le module peut alternativement comprendre plusieurs capteurs différents, ces capteurs pouvant optionnellement être des capteurs de données biométriques de différentes natures (par exemple : visage et iris).

Dans la suite, on distingue les modules de contrôle et/ou d'inspection en deux catégories : le module de contrôle 10, qui est le premier module franchi par une personne, et par lequel une personne est enregistrée dans le système 1, et le ou les module(s) de suivi 20, qui sont les modules suivants que la personne doit franchir avant de sortir de la zone d'inspection. Chacun du module de contrôle 10 et du ou des modules de suivi 20 peut en outre être associé à une unité d'inspection 50 pour mettre en oeuvre une inspection de la personne et/ou de son bagage, comme sera décrit dans la suite.

Avantageusement, mais non limitativement, les modules de suivi 20 et le module de contrôle 10 ne sont reliés par aucun lien matériel. Ils sont uniquement capables de communiquer avec au moins une base de données 30 du système qui gère des informations relatives aux personnes franchissant les différents points de contrôle, ces informations comprenant comme décrit ci-après des données d'identification des personnes et/ou des données de sécurité relatives aux personnes et aux contrôles qu'elles ont subis.

On a représenté sur les figures 1a et 1b un système 1 comprenant un module de contrôle 10 de personnes, et un module de suivi 20.

Le module de contrôle 10 permet de contrôler l'autorisation des personnes à pénétrer dans la zone. Dans le cas où le système est placé en entrée d'une zone d'embarquement dans un aéroport, le module de contrôle 10 est avantageusement adapté pour contrôler le droit d'une personne à embarquer dans un avion, par exemple en contrôlant une carte d'embarquement et/ou un document d'identité et/ou son autorisation à entrer dans la zone, et le cas échéant pour contrôler l'identité de la personne.

Le module de contrôle 10 comprend une unité de traitement 11 et avantageusement un capteur de trait biométrique 12. Alternativement, le capteur 12 peut être adapté pour acquérir, à la place ou en plus des données biométriques, des informations d'identification de l'individu tel que par exemple sa signature, des informations relatives à ses vêtements, etc.

Le module de suivi 20 comprend également une unité de traitement 21 et avantageusement un capteur de trait biométrique 22 et/ou le cas échéant d'autres informations d'identification.

Selon un premier mode de réalisation, comme illustré sur la figure 1a, chaque module de suivi 20 peut comporter une unité de traitement 21 en propre. Alternativement, comme illustré en figure 1b, une unique unité de traitement 11 peut être partagée entre le module de contrôle et un ou plusieurs modules de suivi. Dans ce cas, les capteurs de traits biométriques des modules sont adaptés pour communiquer avec l'unité de traitement.

Les capteurs de trait biométrique sont des dispositifs permettant d'acquérir une donnée biométrique, c'est-à-dire un encodage numérique d'un trait biométrique d'une personne.

Avantageusement, les capteurs de trait biométrique 12, 22 de l'unité de contrôle et de l'unité de suivi sont adaptés pour acquérir chacun une ou plusieurs données biométriques respectivement à partir de traits biométriques de même nature ; c'est-à-dire par exemple une image du visage, de l'iris, une capture d'empreinte digitale, de paumes, de réseaux veineux, etc.

On peut aussi acquérir des données d'identification de la personne qui ne sont pas forcément qualifiées de biométriques (ex : des traits particuliers capturés par vidéo comme la couleur des habits, le gabarit, la couleur de peau...)

Les capteurs 12, 22 sont avantageusement adaptés pour acquérir des traits biométriques à la volée, sans interrompre le cheminement de la personne. C'est le cas par exemple si les capteurs 12, 22 comprennent des caméras permettant l'acquisition à la volée d'une image de visage ou d'iris de la personne. Ceci permet aussi, le cas échéant, d'acquérir une donnée biométrique de la sans la participation active de celle-ci.

On pourra par exemple utiliser des capteurs 12, 22 du type MORPHO 3D FACE READER™ ou MORPHOFACE™ Investigate.

Alternativement les capteurs 12, 22 peuvent aussi être de type capteur d'empreintes digitales, ou de réseaux veineux. On pourra notamment utiliser des capteurs tels que MORPHOSMART™ FINGER VP DESKTOP SERIES, MORPHOSMART™ OPTIC 300 ou 1300 SERIES, MORPHOTOP™, etc.

Les unités de traitement 11, 21 du module de contrôle et du module de suivi sont des processeurs adaptés pour communiquer respectivement les capteurs 12 et 22, et pour exécuter des instructions ou des protocoles décrits ci-après.

Le système 1 comprend en outre une base de données 30 connectées aux unités de traitement 11, 21, afin que lesdites unités puissent accéder à la base de données en lecture et en écriture.

Selon le mode de réalisation de la figure 1a, la base de données 30 est distincte des unités de traitement 11, 21. Cependant, comme sur la figure 1b, une unité de traitement commune 11 et la base de données 30 peuvent être installées sur un unique serveur, par exemple un serveur distant. De manière classique en soi la base de données 30 peut également être associée à un processeur (non représenté) permettant la gestion des données de la base.

On va maintenant décrire plus en détails les fonctionnalités des modules de contrôle et de suivi d'une personne.

Comme indiqué précédemment, le capteur 12 du module de contrôle est adapté pour acquérir au moins une donnée d'identification et/ou au moins une donnée biométrique b à partir d'au moins un trait biométrique B d'une personne, et pour le communiquer à l'unité de traitement.

Celle-ci comprend des instructions de code pour générer, à partir des données communiquées par le capteur 12, un moyen d'identification unique d'une personne sous forme de jeton d'identité sécurisé J. Ce jeton peut être élaboré à partir d'une ou plusieurs données biométriques et/ou une ou plusieurs données d'identité.

Dans un mode de réalisation particulier, le jeton d'identité de la personne est une signature biométrique chiffrée obtenue par cryptage de la donnée biométrique. Le protocole de cryptage peut alors être réalisé par une fonction dite à sens unique, ne permettant pas de retrouver les informations biométriques de la personne à partir de la signature. On pourra par exemple choisir un protocole de cryptage comme décrit dans le document WO2009083518 ou dans le document FR1354006.

Ce jeton d'identité est secret. Il peut être enregistré dans la base de données 30 par l'unité de traitement 11. Alternativement, les informations d'identification et/ou les données biométriques ayant servi à son élaboration sont stockées dans la base de données.

L'unité de traitement 11 génère en outre un identifiant public Id associé à ce jeton d'identité. Cet identifiant est avantageusement généré aléatoirement et est sans rapport avec l'identité de la personne. Il peut par exemple s'agir d'un code alphanumérique généré aléatoirement, distinct du nom, du prénom, et de numéros de documents d'identité de la personne.

Cet identifiant public est enregistré dans la base de données en association avec le jeton d'identité, ou en association avec les données stockées dans la base et qui ont servi à générer le jeton. Par exemple, si la base de données comprend une pluralité de blocs mémoires indexés, un jeton et un identifiant public d'une personne sont également indexés et enregistrés dans le bloc mémoire de même index de la base de données.

Le module de contrôle 10 comporte en outre un dispositif de lecture 13 de document, permettant de contrôler le droit de la personne à pénétrer dans la zone sécurisée. Par exemple, le document peut être une carte d'embarquement munie d'un code-barres ou d'un code alphanumériques, qui comporte des informations d'identification du passager, de son vol.

Le dispositif de lecture 13 est adapté pour communiquer les informations acquises à l'unité de traitement.

L'unité de traitement peut valider le droit de la personne de franchir le module de contrôle seulement quand les informations relatives à sa carte d'embarquement ou tout autre document ont été acquises. Dans ce cas elle peut enregistrer dans la base de données des informations de sécurité selon lesquelles il a été vérifié que la personne a le droit de franchir le module.

Avantageusement, mais facultativement, le module de contrôle 10 peut en outre comprendre un dispositif d'acquisition de données d'identité 14 à partir d'un document d'identité, les données d'identité pouvant par exemple stockées dans le document sous forme de code-barres, de caractères alphanumériques, de carte à puces, etc.

Le cas échéant, les dispositifs 13 et 14 peuvent être confondus en un unique lecteur adapté pour lire à la fois les documents d'identité et des cartes d'accès de la personne à la zone.

Ce dispositif 14 permet d'acquérir des données d'identité de la personne se présentant au module de contrôle, et de communiquer lesdites données à l'unité de traitement 11 pour que celle-ci contrôle l'identité de la personne. Pour ce faire elle peut, de manière connue, comparer une photographie d'identité acquise sur un document d'identité à une photographie de la personne acquise par le capteur 12, ou encore confronter les données d'identité à une autre base de données (non représentées).

L'unité de traitement 11 peut alors valider le droit de la personne à franchir le module de contrôle seulement lorsque son identité a été contrôlée et que sa carte d'embarquement a été validée. A cet égard, le module de contrôle peut comprendre un portique 15 bloquant ou autorisant le passage d'une personne, l'ouverture et la fermeture du portique étant pilotées par l'unité de traitement 11.

L'unité de traitement 11 peut également enregistrer dans la base de données une information de sécurité selon laquelle l'identité de la personne a été vérifiée.

En outre, l'unité de traitement peut également être en communication avec une ou plusieurs bases de données DB extérieures au système 1, par exemple nationales ou internationales, dans laquelle sont stockées des informations concernant les personnes.

Une fois la personne identifiée, l'unité de traitement 11 peut alors rechercher dans la base de données DB des informations relatives à cette personne, par exemple des informations de sécurité comme un niveau de risque associé. Alternativement, l'unité de traitement 11 peut recevoir des informations de la base de données DB sur la personne, et générer en fonction desdites informations un niveau de risque associé. Ce niveau de risque peut être enregistré par l'unité de traitement 11 dans la base de données 30 du système.

Chaque module de suivi 20 se trouve en aval du module de contrôle par rapport au flux des personnes.

Le capteur 22 acquière une ou plusieurs données biométriques et/ou une ou plusieurs données d'identification de la personne. Avantageusement le capteur 22 capte les mêmes données que le capteur 12 précédent. Dans le cas de données biométriques, le capteur 22 acquière donc avantageusement une donnée ou plusieurs données biométriques respectivement à partir du ou des mêmes traits que le capteur 12 du module de contrôle, c'est-à-dire que si le capteur du module de contrôle acquiert une image de visage, le capteur 22 également.

Le capteur 22 est adapté pour communiquer avec l'unité de traitement 21, pour transmettre la donnée ou les données acquises à ladite unité.

L'unité de traitement 21 est ensuite adaptée pour mettre en oeuvre, à partir desdites données, une authentification de la personne avec l'une des personnes dont les identifiants publics sont stockés dans la base, à partir d'une comparaison entre les données acquises par le capteur 22 et les données stockées dans la base, qui comprennent soit les jetons d'identité soit les données biométriques et/ou d'identification ayant permis de générer les jetons.

Ainsi par exemple, si les jetons d'identité comprennent une signature, une empreinte digitale et une couleur de vêtement, l'unité de traitement compare les données correspondantes acquises par le capteur 22 aux différents jetons stockés pour obtenir une correspondance avec l'un d'entre eux.

Selon un mode de réalisation préféré le système de contrôle met en oeuvre une opération de correspondance faiblement discriminante, dite de « lien faible », tel que proposé dans le brevet Morpho n°US7724924B2. Cette opération de correspondance permet d'authentifier la personne sur la base des données acquises par le capteur 22 mais sans identifier formellement la personne.

Selon le mode de réalisation dans lequel le jeton d'identité comprend une signature biométrique chiffrée, l'unité de traitement 21 comprend des instructions de code pour l'exécution du même protocole de cryptage que celui mis en oeuvre par l'unité de traitement 11 du module de contrôle. A partir de la donnée biométrique transmise par le capteur 22, l'unité de traitement 21 génère donc une donnée biométrique chiffrée.

Puis l'unité de traitement 21 accède à la base de données 30 en lecture et compare, la donnée biométrique chiffrée à chacune des signatures biométriques chiffrées stockées dans la base de données, pour détecter une correspondance.

Cette comparaison est mise en oeuvre de préférence au moyen d'un protocole de calcul sécurisé qui permet de comparer les données biométriques entre elles sans avoir besoin de les déchiffrer. L'absence d'identification permet de préserver la confidentialité de la personne qui se présente au module de suivi ainsi que des personnes qui se sont précédemment présentées au module de contrôle et ont leur signature biométrique chiffrée enregistrée dans la base.

Lorsqu'une correspondance a été détectée entre la personne et l'une des personnes enregistrées dans la base par des données l'unité de traitement 21 reçoit de la base de données 30 l'identifiant public associé à la personne, et identifie la personne de laquelle a été obtenue la donnée biométrique comme la personne de laquelle a été préalablement obtenue la signature biométrique chiffrée associée à l'identifiant.

Ceci permet de reconnaître la personne sans avoir accès à son identité.

Le module de suivi 20 peut également comporter un portique 25 autorisant ou bloquant le passage d'une personne, et l'unité de traitement 21 du module commande l'ouverture ou la fermeture du portique. Ainsi une fois que la personne a été identifiée par son identifiant public, l'unité de traitement 21 peut commander le portique 25 pour autoriser le passage de la personne.

L'unité de traitement 21, est également adaptée pour accéder à la base de données 30 en écriture, par exemple pour associer à l'identifiant public de la personne une information selon laquelle elle a franchi le module de contrôle 20, une fois que cette personne a été reconnue.

Ceci permet, notamment dans le cas où le système comprend plusieurs modules de suivi, d'assurer un suivi de la personne par étape. Bien entendu, dans ce cas, les unités de traitement 21 sont également adaptées pour récupérer, au moment de la reconnaissance de la personne par comparaison des données acquises aux données stockées dans la base, l'information selon laquelle la personne a franchi un ou plusieurs modules de contrôle et/ou de suivi précédents.

Dans ce cas également, l'unité de traitement 21 d'un module de suivi peut être configurée pour vérifier qu'une personne a franchi tous les modules de suivi prescrits, et pour supprimer les données d'identification et/ou les données biométriques et/ou les jetons d'identité correspondants une fois que la personne a franchi lesdits modules.

Par exemple, le système 1 peut comprendre trois modules de suivi associés à trois espaces distincts à franchir dans la zone sécurisé, et lorsqu'une personne franchit le troisième module, celui-ci commande à la base de données l'effacement du jeton d'identité de la personne.

Ceci permet en premier lieu de conserver la confidentialité des personnes ayant franchi les différents modules de suivi : les informations liées à leur biométrie sont supprimées, et pourtant on peut conserver par exemples les identifiants publics et les informations associées sur le niveau de risque et les modules franchis à des fins de sécurité ultérieure.

En outre, cela permet aussi de maintenir le nombre de personnes enregistrées dans la base de données à un niveau peu élevé, ce qui diminue significativement le nombre de fausses authentifications réalisées par l'unité de traitement 21 sur la base des données acquises au niveau des modules de suivi.

En outre, cette opération d'authentification est alors réalisée sur un nombre limité de jetons et autorise une reconnaissance quasi instantanée de la personne qui se présente au module de suivi.

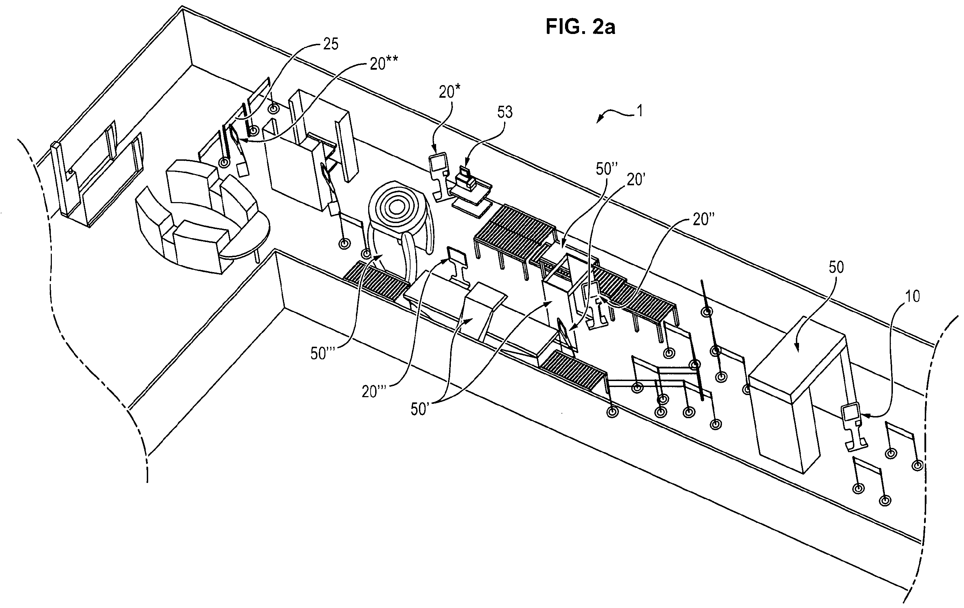

Comme expliqué dans la suite en référence à la figure 2a, il est avantageux d'installer ce système pour réaliser des inspections de sûreté, par exemple pour les aéroports ou autres sites sensibles dans lequel les niveaux de contrôle sont importants.

Dans ce cas, le système 1 comprend en outre au moins une unité d'inspection 50.

De préférence, le système 1 comprend une pluralité de modules de suivi et une pluralité d'unités d'inspection, chaque module de suivi étant associé à une unité d'inspection, et l'identifiant d'une personne par son identifiant public au niveau du module de suivi 20 conditionnant son accès à l'unité d'inspection 50.

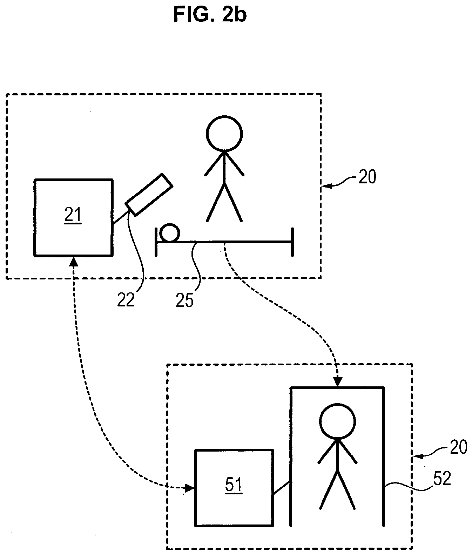

En référence à la figure 2b, chaque unité d'inspection 50 comprend un ou plusieurs capteurs 51 configurés pour pouvoir détecter des éléments déterminés, et une électronique de commande 52 du ou des capteurs. Lorsqu'un module de suivi 20 est associé à une unité d'inspection, on entend que l'unité de traitement 21 du module de suivi est adaptée pour dialoguer avec l'électronique de commande 52 de l'unité d'inspection, et avantageusement que l'unité de traitement peut envoyer des instructions à l'électronique de commande 52 pour piloter l'inspection.

Dans le cas d'une inspection de personnes et de leurs bagages avec l'embarquement dans un aéroport, les unités d'inspection peuvent par exemple des types suivants :
- portique de détection de métal,
- système de scanner aux rayons-X de bagages à main comme par exemple les modèles HRX de Morpho,
- système de détection de traces d'explosifs, comme par exemple les modèles EntryScan® et Itemiser® de Morpho,
- scanner corporel etc.

L'association d'un module de suivi 20 à une unité d'inspection permet tout d'abord d'identifier la personne à inspecter par son identifiant public, donc en toute confidentialité, avant d'autoriser ou d'interdire l'inspection de la personne, et en outre d'adapter le niveau d'inspection et d'enregistrer les résultats de l'inspection dans la base de données.

En effet, lorsqu'une personne se présente à un module de suivi 20 associé à une unité d'inspection 50, avant de procéder à l'inspection, la personne est identifiée par son identifiant public. Cette identification commande le cas échéant l'ouverture d'un portique 25 disposé entre le capteur 22 et l'unité d'inspection 50 pour autoriser l'inspection de la personne par l'unité 50.

De plus, dans le cas où l'identifiant public est associé, dans la base de données, à des informations de sécurité comprenant par exemple un niveau de risque lié à la personne, l'unité de traitement 21 prend connaissance de ce niveau de risque et commande à l'électronique de commande 52 de l'unité d'inspection de mettre en oeuvre une inspection à un niveau de sensibilité déterminé en fonction du niveau de risque.

Par exemple, si la personne présente un niveau de risque élevé, le niveau de sensibilité commandé par l'unité de traitement est élevé. Au contraire, si la personne présente un niveau de risque faible, une étape d'inspection peut être superflue et alors l'unité de traitement 21 peut commander à l'unité d'inspection d'adopter un niveau de sensibilité bas, voire de ne pas mettre en oeuvre d'opération d'inspection.

De manière plus générale, un profil de risque peut être associé à l'identifiant public d'une personne, ce profil comportant un niveau de risque tel qu'obtenu par le module de contrôle au moment du contrôle des droits d'accès de la personne, mais également les résultats des opérations d'inspection déjà subies par la personne.

L'unité de traitement 11 du module de contrôle est adaptée pour générer le profil à partir du niveau de risque reçu sur la personne, et pour enregistrer le profil dans la base de données 30.

Les unités de traitement des modules de suivi 20 sont adaptées pour lire dans la base de données les éléments de ce profil, et également pour écrire dans la base de données 30 les résultats de l'opération d'inspection réalisée par l'unité associée pour mettre à jour le profil et compléter les informations de sécurité sur la personne.

En fonction du profil associé à une personne, un protocole d'inspection est prescrit. Le protocole comporte notamment une liste d'inspections à réaliser sur la personne et le niveau de sensibilité de chaque inspection.

La mise en oeuvre de ce protocole est commandée par les unités de traitement 21 des modules de suivi au fur et à mesure de la progression de la personne.

Le protocole peut également être mis à jour au cours du franchissement des unités d'inspection par la personne. Ainsi par exemple, si un portique de détection de métal a détecté une quantité de métal chez une personne considérée comme non à risque, cette détection est enregistrée dans la base de données et le protocole d'inspection peut prévoir que la personne subisse une fouille corporelle qui n'était pas programmée initialement.

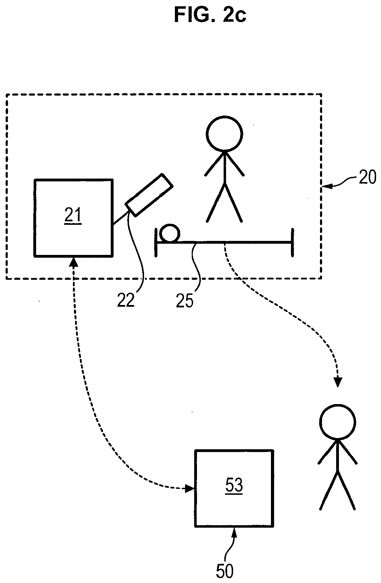

Dans le cas d'une inspection manuelle telle qu'une fouille corporelle, l'unité d'inspection 50, comme représentée en figure 2c, ne comprend pas de capteur ni d'électronique de commande mais simplement un poste informatique 53 muni d'une interface homme-machine par laquelle un opérateur peut saisir les résultats d'une inspection. Le poste informatique 53 est alors en communication avec l'unité de traitement 21 pour informer l'opérateur du niveau de risque associé à la personne à inspecter.

Comme représenté sur la figure 2a, une unité d'inspection 50 peut également être associé au module de contrôle 10. La personne est en effet identifiée au moment du franchissement du module de contrôle 10, et de la même manière l'unité de traitement 11 de ce module peut piloter l'unité d'inspection en fonction du niveau de risque attribué à l'identifiant public de la personne, et enregistrer dans la base de données les résultats de l'inspection.

Enfin un module de suivi 20 peut ne pas être associé à une unité d'inspection 50. C'est par exemple le cas d'un module de suivi 20 à franchir pour sortir de la zone d'inspection et valider l'ensemble des opérations d'inspection réalisées. Lors du franchissement de ce module de suivi, l'unité de traitement correspondante 21 vérifie que toutes les étapes du protocole d'inspection adapté à la personne ont été réalisées avant d'autoriser le franchissement du module par la personne et d'envoyer à la base de données l'instruction de suppression de la signature biométrique chiffrée associée à cet identifiant.

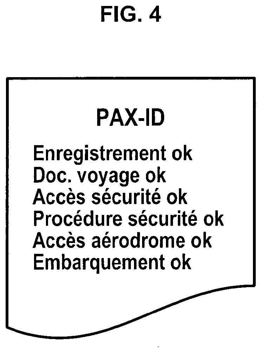

Le récapitulatif des informations de sécurité propres à ladite personne et/ou au traitement de contrôle et/ou d'inspection (mis en oeuvre au niveau d'un point de contrôle et/ou d'inspection) peut également être affiché à l'attention de la personne ou d'un opérateur, comme représenté à titre d'exemple en figure 4.

Ce récapitulatif peut avantageusement comprendre une liste d'informations de sécurité comme le niveau de risque associé à la personne, le fait de savoir s'il a dûment franchi toutes les étapes de contrôle, la vérification des droits d'accès, le résultat des étapes d'inspection etc.

Lorsqu'une des étapes n'a pas été exécutée ou que le bilan de l'opération d'inspection indique que la personne porte des objets à risques (traces d'explosifs, métal, etc.), une alarme peut être déclenchée par l'unité de traitement, ou celle-ci peut interdire la sortie de la personne de la zone d'inspection et le diriger vers un espace sécurisé.

Selon un mode de réalisation particulier, le système d'inspection peut donc comprendre un module de contrôle 10 associé à une unique unité d'inspection 50, et un seul module de suivi 20 en sortie de la zone d'inspection.

Selon un autre mode de réalisation particulier mais aucunement limitatif représenté en figure 2a, un module de contrôle 10 est associé à une unité d'inspection 50 par détection de traces d'explosifs.

Puis, un premier module de suivi 20' est associé à un portique de détection de métal 50' et à une ligne de scanner à rayons X de bagages à mains, et un autre module 20" en parallèle est associé au portique et à une deuxième ligne de scanner à rayons X de bagages à mains 50".

En sortie de ces deux lignes, un module de suivi 20'" est associé à une unité d'inspection 50"' par scanner corporel.

Enfin, un module de suivi 20* est associé à un poste de fouille de bagages et de fouille corporelle comprenant un poste 53.

Une fois que la personne a réalisé l'ensemble du protocole d'inspection qui s'applique à elle, un module de suivi 20** comprenant un portique 25 de sortie de zone permet de terminer le protocole. Ce module n'est pas associé à une unité d'inspection.

On constate qu'il suffit à une personne d'avoir subi tout le protocole d'inspection, quel que soit l'ordre des inspections, pour franchir la zone d'inspection. Ceci supprime le caractère séquentiel, et donc les files d'attentes, des inspections classiques.

En outre, et en particulier dans le cas où il y a plusieurs unités d'inspection, les unités de traitement 21 des modules de suivi peuvent recevoir des informations relatives aux flux de personnes dans la zone d'inspection (ces informations pouvant provenir des unités de traitement elles-mêmes ou de l'extérieur du système 1) et adapter en fonction de ces informations l'ordre de mise en oeuvre du protocole d'inspection.

Par exemple, dans le cas de la figure 2a, à l'issue d'une unité d'inspection 50 de détection de traces d'explosifs, deux lignes de scanners de bagages à mains par rayons X sont installées, permettant de répartir le flux de personnes en fonction de la charge de chaque ligne.

Si l'unité d'inspection 50 associée au détecteur de traces d'explosifs détermine qu'il n'y a pas de file d'attente au premier scanner rayons X 50', elle peut préconiser à la personne de se diriger vers le scanner après avoir franchi le détecteur de traces d'explosifs. A cet égard, les unités de traitement des modules de suivi et de contrôle sont avantageusement pourvues d'interfaces hommes-machines permettant d'afficher ces informations.

### Procédé de contrôle

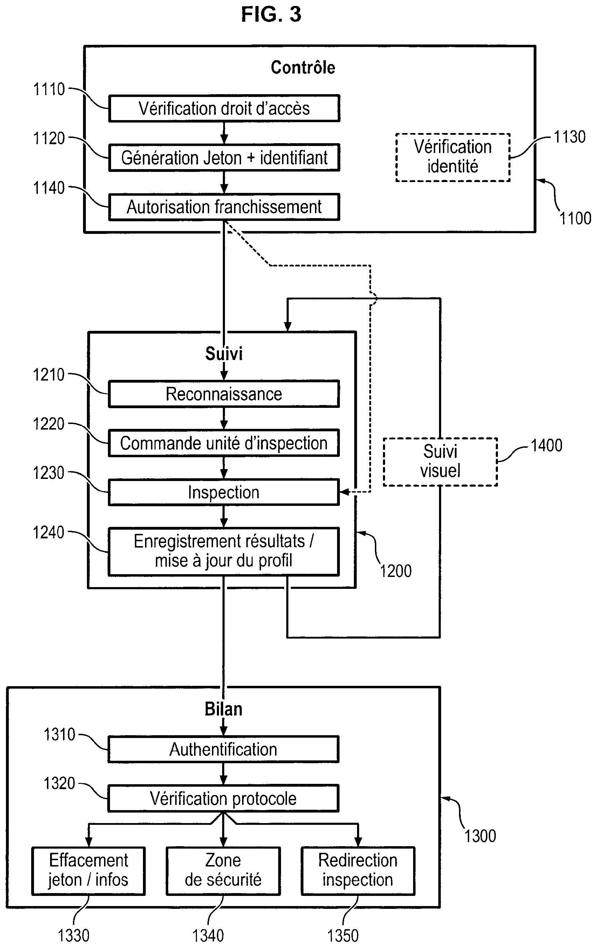

On va maintenant récapituler, en référence à la figure 3, les principales étapes d'un procédé de contrôle mis en oeuvre par un système décrit ci-avant.

Au cours d'une première étape 1100, une personne se présente auprès d'un premier point de contrôle et/ou d'inspection, matérialisé par un module de contrôle 10.

Celui-ci vérifie 1110 son droit d'accès à la zone, par exemple par lecture d'une carte d'embarquement et génère 1120, à partir d'une donnée biométrique et/ou d'identification acquise sur la personne, un jeton d'identité J et un identifiant public ID associé qu'il stocke dans la base de données 30 en association avec le jeton ou les données biométriques et/ou d'identification ayant permis son élaboration.

Eventuellement, le module de contrôle vérifie 1130 l'identité de la personne et obtient auprès d'une base de données extérieure un ensemble d'informations permettant d'attribuer à la personne des informations de sécurité comme un niveau de risque, entrainant la prescription d'un protocole précis d'inspection de la personne. D'autres informations de sécurité peuvent être attribuées à la personne, telles qu'une validation de l'identité ou une validation du contrôle d'accès.

Puis l'unité de traitement 11 du module de contrôle 10 autorise 1140 le franchissement du module 10 par la personne.

Si ce premier module est un point de contrôle et d'inspection de la personne, une unité d'inspection est associée au module de contrôle 50. Dans ce cas, au cours de l'étape 1140, l'unité de traitement 11 autorise la personne à se présenter à l'unité d'inspection. Puis ont lieu les étapes d'inspection 1230 et 1240 décrites ci-après.

En revanche, si ce premier module est uniquement un point de contrôle, la personne se présente ensuite à un second point de contrôle et/ou d'inspection, matérialisé par un module de suivi 20.

Au cours d'une seconde étape 1200, la personne se présente auprès d'un second point de contrôle et/ou d'inspection, ce point étant matérialisé par un premier module de suivi 20. Le module de suivi 20 acquière des données biométriques et/ou d'identification sur la personne correspondant aux données ayant servi à générer le jeton d'identité.

Selon le mode de réalisation particulier dans lequel le jeton d'identité comprend une signature biométrique chiffrée, une donnée biométrique est acquise à partir du même trait biométrique que celui à partir duquel a été générée la signature biométrique chiffrée.

Puis cette donnée biométrique, une fois chiffrée par le même protocole que celui mis en oeuvre par le module de contrôle 10, est comparée aux signatures stockées dans la base, afin que le module de suivi 20 identifie la personne par son identifiant public.

De façon plus générale, l'unité de traitement 21 réalise une authentification de la personne à partir des données acquises, et des données ou jetons stockées dans la base.

A partir de cette reconnaissance, l'unité de traitement 21 du module de suivi accède au profil de la personne dans la base de données, et en particulier aux informations de sécurité comprenant le niveau de risque associé à la personne, et le cas échéant aux résultats de l'inspection menée au premier point d'inspection.

A partir de ces informations de sécurité, l'unité de traitement en déduit des instructions d'inspection à mettre en oeuvre sur la personne pour la mise en oeuvre du protocole d'inspection prescrit.

L'unité de traitement 21 commande 1220 à l'unité d'inspection 50 un niveau de sensibilité à adopter à l'inspection de la personne.

Au stade de la reconnaissance de la personne par son identifiant public, l'unité de traitement 21 peut également recevoir des informations sur les nombres de personnes en train d'attendre aux points de contrôle et/ou d'inspection suivant, et en fonction de ces données, elle peut indiquer à la personne un point de contrôle et/ou d'inspection vers lequel se diriger ensuite. Cette étape peut bien entendu être aussi mise en oeuvre par le module de contrôle.

L'unité de traitement autorise la personne à procéder à l'inspection, qui est ensuite mise en oeuvre au cours d'une étape 1230. Alternativement, comme indiqué ci-avant, l'inspection est mise en oeuvre après le contrôle de la personne par le module de contrôle, si l'unité d'inspection est associée au module d'inspection.

Au terme de l'inspection, l'unité de traitement 21 (ou 11 le cas échéant) reçoit de l'unité d'inspection 50 un résultat de l'inspection menée et enregistre 1240 ces résultats dans la base de données pour mettre à jour le profil de la personne.

La personne franchit ainsi les différents points de contrôle et/ou d'inspection, chaque unité d'inspection associée à un module de suivi 20 adaptant le niveau de sensibilité en fonction des étapes précédentes.

Avantageusement, mais facultativement, entre deux points de contrôle et/ou d'inspection d'une personne ou de son bagage, un suivi 1400 sans identification de la personne peut être réalisé. Pour ce faire, des caméras peuvent être installées dans la zone d'inspection, une première caméra détectant la personne au moment du franchissement d'un point de contrôle, et associant à la personne l'identifiant public de la personne venant de s'identifier à ce point.

Puis, lors du déplacement de la personne, d'autres images de cette personne peuvent être acquises par la même ou d'autres caméra, cette personne étant reconnue par exemple par son visage, sa tenue ou sa démarche.

Enfin, la personne accède au module de suivi 20 en sortie de zone d'inspection pour un bilan 1300 du protocole d'inspection, et réitère l'opération d'identification par identifiant public 1310.

L'unité de traitement 21 consulte la base de données 30 pour vérifier 1320 que la personne a franchi toutes les étapes du protocole d'inspection et qu'aucun risque n'a été identifié. Dans ce cas, l'unité de traitement 21 du module autorise à la personne de sortir de la zone d'inspection et efface 1330 les données biométriques et/ou d'identification ou le jeton d'identité correspondant à son identifiant public de la base de données tout en conservant les autres informations du profil.

Si un risque a été identifié chez la personne au terme de l'inspection, sa sortie de la zone d'inspection est interdite et elle est dirigée vers un espace de sécurité 1340.

Si la personne n'a pas effectué l'une des étapes du protocole d'inspection, l'unité de traitement 21 l'en informe 1350.

On a ainsi proposé un système d'inspection d'une personne permettant de suivre la personne tout au long du protocole d'inspection sans avoir à la localiser géographiquement dans la zone d'inspection. Il suffit en effet d'accéder au profil associé à l'identifiant public de la personne pour savoir quelles étapes d'inspection elle a déjà franchies et quelles étapes sont encore à franchir.

En outre, si les capteurs 12, 22 sont capables d'acquérir des données biométriques à la volée, le protocole d'inspection est réalisé sans freiner la progression de la personne, et même sans que celle-ci se rende compte qu'un protocole d'inspection spécifique est mis en oeuvre pour elle.

Ce protocole d'inspection est aussi réalisé en toute confidentialité puisqu'il est réalisé en suivant un identifiant public généré aléatoirement. Pour les services de sécurité, il est toutefois possible d'accéder au jeton d'identité associé à l'identifiant et aux résultats d'inspection associés à l'identifiant et à ce jeton.

Le procédé de contrôle présenté est également compatible avec une gestion de flux classique de personnes, puisque comme indiqué ci-avant le flux de personnes peut être géré en temps réel en fonction de l'affluence aux différentes unités d'inspection.

## Revendications

1. Procédé de contrôle de personnes, dans lequel différentes étapes de contrôle et/ou d'inspection sont mises en œuvre en différents points de contrôle et/ou d'inspection destinés à être franchis par une personne, le procédé étant mis en œuvre par un système comprenant lesdits points de contrôle et/ou d'inspection, disposés dans une zone d'inspection à franchir pour accéder à une zone à accès sécurisé,
**caractérisé par** la mise en œuvre des opérations suivantes :
- lors du passage d'une personne en un premier point de contrôle et/ou d'inspection:
• acquisition de données biométriques de la personne,
• génération (1120) d'un jeton d'identité sécurisé (J), le jeton étant une signature biométrique chiffrée obtenue à partir d'une donnée biométrique acquise sur la personne,
• génération d'un identifiant public (ID) associé audit jeton, et stockage dudit identifiant dans une base de données (30) mémorisant les identifiants publics (ID) en association avec les jetons didentité ou les données à partir desquelles ils sont générés,
- lors du passage d'une personne en au moins un autre point de contrôle et/ou d'inspection,
• acquisition d'une donnée biométrique sur le ou les mêmes traits biométriques que ceux sur lesquels la donnée biométrique a été acquise lors du passage au premier point de contrôle et à partir de laquelle le jeton d'identité (J) a été généré,
• obtention, à partir de ladite donnée biométrique, d'une donnée biométrique chiffrée par exécution du même protocole de cryptage que celui mis en œuvre pour obtenir le jeton sécurisé,
• détermination (1210) de l'identifiant public de la personne, en mettant en oeuvre une authentification de ladite personne par comparaison de la donnée biométrique chiffrée au jeton d'identité sécurisé, la comparaison étant misé en œuvre au moyen d'un protocole de calcul sécurisé,
• association (1130, 1240) à l'identifiant public d'une personne d'informations de sécurité propres à ladite personne et/ou au traitement de contrôle et/ou d'inspection mis en œuvre au niveau dudit point, et
• mémorisation de ces informations avec ledit identifiant public dans la base de données.

2. Procédé selon la revendication 1, dans lequel les données biométriques sont acquises à la volée à partir de capteurs biométriques sans contact.

3. Procédé selon la revendication 1 comportant en outre lors du passage de celle-ci en au moins un point de contrôle et/ou d'inspection :
• une détermination des informations de sécurité associées à l'identifiant public d'une personne.
• une adaptation (1220) du traitement de contrôle et/ou d'inspection audit point de contrôle en fonction de ces informations.

4. Procédé selon la revendication 3, dans lequel les informations de sécurité associées à l'identifiant public d'une personne comportent un profil de risque de la personne, et un protocole d'inspection déterminé en fonction du profil de risque est mis en œuvre sur la personne à chaque point de contrôle et/ou d'inspection,

5. Procédé selon la revendication 4, dans lequel le protocole d'inspection comporte des instructions de franchissement de points de contrôle et/ou d'inspection déterminés et des niveaux de sensibilité d'inspection à mettre en œuvre en un ou plusieurs points de contrôle et/ou d'inspection.

6. Procédé selon l'une des revendications 3 à 5, comportant en outre, lors du passage d'une personne en un point de contrôle et/ou d'inspection, une fois que ladite personne a franchi un ou plusieurs points de contrôle et/ou d'inspection déterminés, l'effacement (1330) du jeton d'identité ou des informations biométriques ou d'identification de la personne dans la base de données (30).

7. Procédé selon la revendication 6, dans lequel, après l'effacement du jeton d'identité ou des informations biométriques ou d'identification d'une personne dans la base de données, l'identifiant public associé et des informations de sécurité propres à la personne et/ou aux traitements de contrôle et/ou d'inspection mis en œuvre sur ladite personne sont stockés dans la base.

8. Procédé selon l'une des revendications précédentes, comportant en outre, lors du passage d'une personne en au moins Un point de contrôle et/ou d'inspection :
• l'acquisition d'informations relatives à des nombres de personnes se présentant à des points de contrôle et/ou d'inspection ; et
• l'aiguillage de personnes vers un point de contrôle et/ou d'inspection suivant en fonction desdites informations.

9. Procédé selon l'une des revendications précédentes, comprenant, au cours du passage d'une personne en un point de contrôle et/ou d'inspection, la vérification (1110) de droits de franchissement de la personne dudit point de contrôle et/ou d'inspection.

10. Procédé selon l'une des revendications précédentes, dans lequel au moins un point de contrôle et/ou d'inspection est appliqué à un bagage associé à une personne, le procédé comprenant lors du passage dudit point de contrôle et/ou d'inspection appliqué à un bagage, l'association à l'identifiant public de la personne d'informations propres au traitement de contrôle et/ou d'inspection mis en œuvre sur le bagage.

11. Procédé selon l'une des revendications précédentes, comprenant, lors du franchissement d'un point et contrôle et/ou d'inspection par une personne, l'acquisition d'images de ladite personne, et, lors du déplacement de la personne entre deux points de contrôle et/ou d'inspection, le suivi (1400) de ladite personne par acquisition d'images de ladite personne.

12. Application du procédé selon l'une des revendications précédentes pour le contrôle et l'inspection de passagers et de personnel navigant dans un aéroport.

13. Système (1) de contrôle et d'inspection de personnes dans une zone d'inspection, le système comprenant une pluralité de points de contrôle et/ou d'inspection, le système comprenant en outre au moins une unité de traitement comprenant des moyens pour la mise en œuvre du procédé selon l'une des revendications 1 à 10.

14. Système (1) de contrôle d'inspection de personnes selon la revendication précédente, comprenant en chaque point de contrôle et/ou d'inspection un module (10, 20) comprenant une unité de traitement (11, 21) et un capteur biométrique (12, 22), et comprenant en outre au moins une unité d'inspection (50) associée audit module, l'unité d'inspection (50) étant adaptée pour communiquer avec l'unité de traitement (11, 21) pour adapter un traitement d'inspection d'une personne en fonction d'informations fournies par l'unité de traitement.

## Patentansprüche

1. Personenkontrollverfahren, bei dem verschiedene Kontroll- und/oder Überprüfungsschritte an verschiedenen Kontroll- und/oder Überprüfungspunkten umgesetzt werden, die dazu bestimmt sind, von einer Person durchschritten zu werden, wobei das Verfahren von einem System umgesetzt wird, das die Kontroll- und/oder Überprüfungspunkte umfasst, die in einem Überprüfungsbereich angeordnet sind, der durchschritten werden muss, um zu einem Bereich mit gesichertem Zugang zu gelangen,
**gekennzeichnet durch** die Umsetzung der folgenden Vorgänge:
- beim Passieren einer Person an einem ersten Kontroll- oder Überprüfungspunkt:
-- Erfassen von biometrischen Daten der Person,
-- Erzeugen (1120) eines gesicherten Identitäts-Tokens (J), wobei der Token eine verschlüsselte biometrische Signatur ist, die auf Grundlage von an der Person erfassten biometrischen Daten erhalten wird,
-- Erzeugen einer öffentlichen Kennung (ID), die dem Token zugeordnet ist, und Speichern der Kennung in einer Datenbank (30), die die öffentlichen Kennungen (ID) in Zuordnung zu den Identitäts-Token oder den Daten, auf deren Grundlage sie erzeugt werden, speichert,
- beim Passieren einer Person an mindestens einem weiteren Kontroll- und/oder Überprüfungspunkt,
-- Erfassen von biometrischen Daten an dem- oder denselben biometrischen Zügen wie denjenigen, an denen die biometrischen Daten beim Passieren am ersten Kontrollpunkt erfasst wurden, und auf deren Grundlage der Identitäts-Token (J) erzeugt wurde,
-- Erhalten von verschlüsselten biometrischen Daten auf Grundlage der biometrischen Daten durch Ausführen desselben Verschlüsselungsprotokolls wie jenem, das umgesetzt wurde, um den gesicherten Token zu erhalten,
-- Bestimmen (1210) der öffentlichen Kennung der Person unter Umsetzen einer Authentifizierung der Person durch Vergleichen der verschlüsselten biometrischen Daten mit dem gesicherten Identitäts-Token, wobei der Vergleich mittels eines gesicherten Rechenprotokolls umgesetzt wird,
-- Zuordnen (1130, 1240) von Sicherheitsinformationen, die der Person und/oder der auf Höhe des Punktes umgesetzten Kontroll- und/oder Überprüfungsverarbeitung eigen sind, zur öffentlichen Kennung einer Person, und
-- Speichern dieser Informationen mit der öffentlichen Kennung in der Datenbank.

2. Verfahren nach Anspruch 1, wobei die biometrischen Daten on-the-fly auf Grundlage von kontaktlosen biometrischen Sensoren erfasst werden.

3. Verfahren nach Anspruch 1, das beim Passieren derjenigen an mindestens einem Kontroll- und/oder Überprüfungspunkt weiter umfasst:
- ein Bestimmen der Sicherheitsinformationen, die der öffentlichen Kennung einer Person zugeordnet sind,
- ein Anpassen (1220) der Kontroll- und/oder Überprüfungsverarbeitung am Kontrollpunkt in Abhängigkeit von diesen Informationen.

4. Verfahren nach Anspruch 3, wobei die der öffentlichen Kennung einer Person zugeordneten Sicherheitsinformationen ein Gefährdungsprofil der Person umfassen, und an jedem Kontroll- und/oder Überprüfungspunkt ein Überprüfungsprotokoll an der Person umgesetzt wird, das in Abhängigkeit vom Gefährdungsprofil bestimmt wird.

5. Verfahren nach Anspruch 4, wobei das Überprüfungsprotokoll Anweisungen zum Durchschreiten von bestimmten Kontroll- und/oder Überprüfungspunkten und Überprüfungsempfindlichkeitsstufen umfasst, die an einem oder mehreren Kontroll- und/oder Überprüfungspunkten umgesetzt werden sollen.

6. Verfahren nach einem der Ansprüche 3 bis 5, das beim Passieren einer Person an einem Kontroll- und/oder Überprüfungspunkt weiter das Löschen (1330) des Identitäts-Tokens oder der biometrischen oder Identifikationsinformationen der Person in der Datenbank (30) umfasst, sobald die Person einen oder mehrere bestimmte Kontroll- und/oder Überprüfungspunkte durchschritten hat.

7. Verfahren nach Anspruch 6, wobei nach dem Löschen des Identitäts-Tokens oder der biometrischen oder Identifikationsinformationen einer Person in der Datenbank die zugeordnete öffentliche Kennung und Sicherheitsinformationen, die der Person und/oder den an der Person umgesetzten Kontroll- und/oder Überprüfungsverarbeitungen eigen sind, in der Bank gespeichert werden.

8. Verfahren nach einem der vorstehenden Ansprüche, das beim Passieren einer Person an mindestens einem Kontroll- und/oder Überprüfungspunkt weiter umfasst:
- das Erfassen von Informationen bezüglich Zahlen von Personen, die sich an Kontroll- und/oder Überprüfungspunkten einfinden; und
- das Lotsen von Personen zu einem nächsten Kontroll- und/oder Überprüfungspunkt in Abhängigkeit von den Informationen.

9. Verfahren nach einem der vorstehenden Ansprüche, das im Laufe des Passierens einer Person an einem Kontroll- und/oder Überprüfungspunkt das Verifizieren (1110) von Rechten der Person zum Durchschreiten des Kontroll- und/oder Überprüfungspunkts umfasst.

10. Verfahren nach einem der vorstehenden Ansprüche, wobei mindestens ein Kontroll- und/oder Überprüfungspunkt auf ein Gepäck angewendet wird, das einer Person zugeordnet ist, wobei das Verfahren beim Passieren des auf ein Gepäck angewendeten Kontroll- und/oder Überprüfungspunkts das Zuordnen von Informationen, die der am Gepäck umgesetzten Kontroll- und/oder Überprüfungsverarbeitung eigen sind, zur öffentlichen Kennung der Person umfasst.

11. Verfahren nach einem der vorstehenden Ansprüche, das beim Durchschreiten eines Punkts und Kontrolle und/oder Überprüfung durch eine Person das Erfassen von Bildern der Person, und bei der Bewegung der Person zwischen zwei Kontroll- und/oder Überprüfungspunkten das Verfolgen (1400) der Person durch Aufzeichnen von Bildern der Person umfasst.

12. Anwendung des Verfahrens nach einem der vorstehenden Ansprüche zur Kontrolle und Überprüfung von Passagieren und Personal, das sich auf einem Flughafen aufhält.

13. System (1) zur Kontrolle und Überprüfung von Personen in einem Überprüfungsbereich, wobei das System eine Vielzahl von Kontroll- und/oder Überprüfungspunkten umfasst, wobei das System weiter mindestens eine Verarbeitungseinheit umfasst, die Mittel für das Umsetzen des Verfahrens nach einem der Ansprüche 1 bis 10 umfasst.

14. System (1) zur Kontrolle von Überprüfung von Personen nach dem vorstehenden Anspruch, das an jedem Kontroll- und/oder Überprüfungspunkt ein Modul (10, 20) umfasst, welches eine Verarbeitungseinheit (11, 21) und einen biometrischen Sensor (12, 22) umfasst, und weiter mindestens eine Überprüfungseinheit (50) umfasst, die dem Modul zugeordnet ist, wobei die Überprüfungseinheit (50) dafür geeignet ist, mit der Verarbeitungseinheit (11, 21) zu kommunizieren, um eine Verarbeitung zur Überprüfung einer Person in Abhängigkeit von Informationen, die von der Verarbeitungseinheit geliefert werden, anzupassen.

## Claims

1. Method for checking persons, wherein various checking and/or inspection steps are implemented at various check and/or inspection points intended to be passed by a person, the method being implemented by a system comprising said check and/or inspection points, disposed in an inspection zone to be passed in order to access a zone with secure access,
**characterised by** the implementation of the following operations:
- during the passage of a person through a first check and/or inspection point:
-- acquisition of biometric data of the person,
-- generation (1120) of a secure identity token (J), the token being an encrypted biometric signature obtained from a piece of biometric data acquired from the person,
-- generation of a public identifier (ID) associated with said token, and storage of said identifier in a database (30) memorising the public identifiers (ID) in association with the identity tokens or the data from which they are generated,
- during the passage of a person through at least one check and/or inspection point,
-- acquisition of a piece of biometric data from the same biometric trait or traits as those from which the piece of biometric data was acquired during the passage through the first check point and from which the identity token (J) was generated,
-- obtaining, from said piece of biometric data, of an encrypted piece of biometric data by execution of the same encryption protocol as that implemented in order to obtain the secure token,
-- determination (1210) of the public identifier of the person, by implementing an authentication of said person by comparison of the encrypted piece of biometric data to the secure identity token, the comparison being implemented by means of a secure calculation protocol,
-- association (1130, 1240), with the public identifier of a person, of security information specific to said person and/or to the check and/or inspection processing implemented at said point, and
-- memorisation of this information with said public identifier in the database.

2. Method according to claim 1, wherein the biometric data is acquired on the fly from contactless biometric sensors.

3. Method according to claim 1, further comprising, during the passage of the latter through at least one check and/or inspection point:
- a determination of the secure information associated with the public identifier of a person,
- an adaptation (1220) of the check and/or inspection processing to said check point according to this information.

4. Method according to claim 3, wherein the security information associated with the public identifier of a person comprises a risk profile of the person, and a protocol inspection determined according to the risk profile is implemented on the person at each check and/or inspection point.

5. Method according to claim 4, wherein the inspection protocol comprises instructions for passing through determined check and/or inspection points and levels of sensitivity inspection to be implemented in one or more check and/or inspection points.

6. Method according to one of claims 3 to 5, further comprising, during the passage of a person through a check and/or inspection point, once said person has passed through one or more determined check and/or inspection points, the erasing (1330) of the identity token or of the biometric or identity information of the person in the database (30).

7. Method according to claim 6, wherein, after the erasing of the identity token or of the biometric or identity information of a person in the database, the associated public identifier and security information specific to the person and/or to the check and/or inspection processing implemented on said person are stored in the database.

8. Method according to one of the previous claims, further comprising, during the passage of a person through at least one check and/or inspection point:
- the acquisition of information relative to numbers of persons presenting themselves at check and/or inspection points; and
- the directing of persons towards a following check and/or inspection point according to said information.

9. Method according to one of the previous claims, comprising, during the passage of a person through a check and/or inspection point, the verification (1110) of rights of passage of the person through said check and/or inspection point.

10. Method according to one of the previous claims, wherein at least one check and/or inspection point is applied to a piece of luggage associated with a person, the method comprising, during the passage of said check and/or inspection point applied to a piece of luggage, the association, with the public identifier of the person, of information specific to the processing of check and/or inspection implemented on the piece of luggage.

11. Method according to one of the previous claims, comprising, during the passage of a check and/or inspection point by a person, the acquisition of images of said person, and, during the movement of the person between two check and/or inspection points, the monitoring (1400) of said person by acquisition of images of said person.

12. Application of the method according to one of the previous claims for the check and the inspection of passengers and staff navigating in an airport.

13. System (1) for checking and inspecting persons in an inspection zone, the system comprising a plurality of check and/or inspection points, the system further comprising at least one processing unit comprising means for the implementation of the method according to one of claims 1 to 10.

14. System (1) for checking and inspecting persons according to the previous claim, comprising, in each check and/or inspection point, a module (10, 20) comprising a processing unit (11, 21) and a biometric sensor (12, 22), and further comprising at least one inspection unit (50) associated with said module, the inspection unit (50) being adapted for communicating with the processing unit (11, 21) in order to adapt a processing of inspection of a person according to information provided by the processing unit.
